(19) Europäisches Patentamt
European Patent Office
Office européen des brevets

(11) Veröffentlichungsnummer: 0 384 980 A1

(12) **EUROPÄISCHE PATENTANMELDUNG**

(21) Anmeldenummer: 89123890.9

(22) Anmeldetag: 23.12.89

(51) Int. Cl.5: C08G 69/32, C08G 69/42, C08K 5/353, C08K 5/3447, C08K 5/46

(30) Priorität: 25.02.89 DE 3905884

(43) Veröffentlichungstag der Anmeldung: 05.09.90 Patentblatt 90/36

(84) Benannte Vertragsstaaten: AT BE DE FR GB IT NL

(71) Anmelder: HÜLS AKTIENGESELLSCHAFT
Patentabteilung / PB 15 - Postfach 13 20
D-4370 Marl 1(DE)

(72) Erfinder: Finke, Jürgen, Dr.
Münsterlandstrasse 22
D-4370 Marl(DE)
Erfinder: Feinauer, Roland, Dr.
Flämingstrasse 34
D-4370 Marl(DE)

(54) **Verfahren zur Herstellung eines thermoplastisch verarbeitbaren, aromatischen Polyamids.**

(57)

2.1 Es sollen aromatische Polyamide mit einer verbesserten Stabilität gegen Thermooxidation zur Verfügung gestellt werden.

2.2 Dies wurde dadurch erreicht, daß der als Schmelze vorliegende Reaktionsmischung 0,05 bis 4 Mol-% - bezogen auf die Summe der Komponenten A. und B. - einer Verbindung der allgemeinen Formel (I)

Formel (I)

(I) 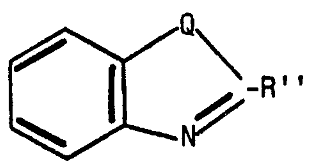 ,

in der
Q: -O-; -S-; N-R‴;
R″, R‴: -H; $C_1$ - $C_6$-Alkyl, Phenyl;
zugesetzt wird.

2.3 Mit Hilfe des erfindungsgemäßen Verfahren gelingt es, gegen Thermooxidation stabile aromatische Polyamide zu erhalten.

EP 0 384 980 A1

# Verfahren zur Herstellung eines thermoplastisch verarbeitbaren. aromatischen Polyamids

Gegenstand der Erfindung ist ein Verfahren zur Herstellung eines thermoplastisch verarbeitbaren, aromatischen Polyamids durch Polykondensieren nachstehender Ausgangsmonomeren:

A. HOOC - Ar - COOH

B. $H_2N$ - Ar′ - $NH_2$ hierbei bedeutet

Ar: 1.3- oder 1.4-Phenylen; 1.4-, 1.5-, 2.6- oder 2.7-Naphthylen,

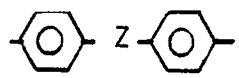

oder

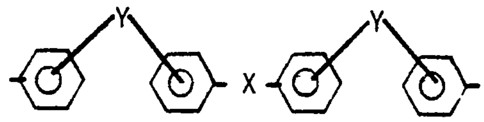

;

Ar':

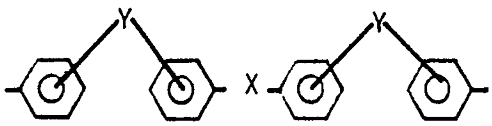

;

X: $-SO_2-$; -CO-;
Y: -O- ; -S-;
Z: -O- ; -S-; $-SO_2-$; -CO-; $-CR_2-$;
R: -H; $C_1$ - $C_4$-Alkyl;

in der Schmelze in Gegenwart von 0,05 bis 4 Mol-% - bezogen auf die Summe der Komponenten A. und B. - einer vom Phosphor abgeleiteten Säure der allgemeinen Formel $H_3PO_n$ mit n = 2 bis 4 oder Triphenylphosphit bei Temperaturen im Bereich von 200 bis 400 °C.

Die Herstellung solcher Polyamide ist grundsätzlich bekannt (DE-OS 36 09 011). Die Schmelzviskosität dieser aromatischen Polyamide ist allerdings hoch. Daher sind bei ihrer Herstellung und Verarbeitung sehr hohe Temperaturen erforderlich - im allgemeinen mindestens 350 °C. Bei diesen Temperaturen wird häufig eine Schädigung des Produkts beobachtet, erkennbar an Verfärbungen oder einer Verschlechterung der mechanischen Eigenschaften.

Aufgabe der Erfindung war es, Formmassen auf Basis aromatischer Polyamide zur Verfügung zu stellen, die die geschilderten Nachteile der Produkte des Standes der Technik nicht aufweisen.

Die Aufgabe wurde dadurch gelöst, daß die Polykondensationsreaktion in Gegenwart von 0,05 bis 4 Mol-% - bezogen auf die Summe der Komponenten A. und B. - eine Verbindung der allgemeinen Formel (I)

(I) 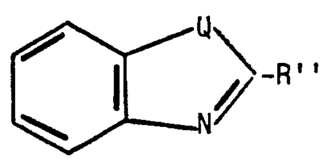 ,

in der
Q: -O-; -S-; N-R‴
R″, R‴: -H; $C_1$ - $C_6$-Alkyl-Phenyl
bedeuten und wobei R″ und R‴ gleich oder verschieden sein können, ausgeführt wird.

Als Verbindungen der allgemeinen Formel (I) kommen z. B. Benzimidazol, 2-Methyl-benzimidazol, 2-Ethylbenzimidazol, 2-Phenylbenzimidazol, 2.3-Diphenylbenzimidazol, Benzoxazol, 2-Methylbenzoxazol, 2-Ethylbenzoxazol, 2-Phenylbenzoxazol, Benzthiazol, 2-Phenylbenzthiazol in Frage. Als besonders geeignet haben sich Benzimidazol, 2-Phenylbenzimidazol, Benzoxazol und 2-Phenylbenzoxazol erwiesen.

In bevorzugter Weise wird die Verbindung der allgemeinen Formel (I) in Mengen von 0,2 bis 2 Mol-% - bezogen auf die Summe der Komponenten A. und B. - eingesetzt.

Als aromatische Dicarbonsäuren (Komponente A.) werden Isophthalsäure, Terephthalsäure, 1.4-, 1.5-, 2.6-, 2.7-Naphthalindicarbonsäure, 4.4′-Diphenyletherdicarbonsäure oder 4.4′-Benzophenondicarbonsäure, 4.4′-Diphenylsulfondicarbonsäure, 2-Phenoxy-terephthalsäure oder Gemische davon eingesetzt.

Als aromatische Diamine (Komponente B.) kommen z. B. 4.4′-Bis(4-aminophenoxy)diphenylsulfon, 4.4′-Bis(3-aminophenoxy)diphenylsulfon, 4.4′-Bis(4-aminophenoxy)benzophenon, 4.4′-Bis(3-aminophenoxy)-benzophenon, 4.4′-Bis(p-aminophenylmercapto)benzophenon, 4.4′-Bis(p-aminophenylmercapto)-diphenylsulfon oder Gemische davon in Frage.

Bevorzugt eingesetzt werden Isophthalsäure; 4.4′-Bis(4-aminophenoxy)diphenylsulfon.

Das molare Einsatzverhältnis der Komponenten A. und B. bewegt sich im Bereich von etwa 1 : 1.

Um eine weitere verbesserte Hydrolysebeständigkeit der Polyamide zu erreichen, können den erfindungsgemäßen Produkten noch 0,01 bis 10 Mol-% - bezogen auf die Summe der Komponenten A. und B. - eines niedermolekularen aliphatischen, araliphatischen oder aromatischen Carbonsäureamids zugesetzt werden. Hierbei kann der aromatische Rest durch Halogen oder durch $C_1$ - bis $C_4$-Alkylreste substituiert sein. Diese Maßnahme wird in DE-OS 38 04 401 beschrieben.

Bevorzugt eingesetzt werden als aliphatische Carbonsäureamide Essigsäure-N-ethylamid, Buttersäure-N-ethylamid, Buttersäure-N-decylamid oder Propionsäure N-octylamid,
als araliphatische Carbonsäureamide Benzoesäure-N-butylamid, Tolylsäure-N-butylamid, Buttersäure-N-phenylamid,
sowie als aromatische Carbonsäureamide Benzanilid, 4-Chlorbenzoesäureanilid, Tolylanilid, Benzoesäure-N-(4.4′-phenoxy)diphenylsulfonamid, 2-Naphthalincarbonsäureanilid.

Es ist aber auch möglich, die niedermolekularen Carbonsäureamide mit Hilfe amidbildender Verbindungen in der Reaktionsmischung selbst in situ herzustellen. Hierbei werden amidbildende Verbindungen, wie aromatische Carbonsäuren, z. B. Benzoesäure, Naphthalincarbonsäure oder Chlorbenzoesäure, und/oder aliphatische Carbonsäuren mit 1 - 20 C-Atomen mit aromatischen Aminen, z. B. Anilin, Chloranilin, Naphthylamin, 4-(4-Aminophenoxy)diphenylsulfon, und/oder aliphatischen Aminen mit 4 bis 20 C-Atomen zur Reaktion gebracht. Carbon säure und Amin werden bevorzugt in äquimolaren Mengen eingesetzt. Die Glastemperatur ($T_g$) der erfindungsgemäßen Polyamide liegt im Bereich von 190 bis 270 °C, die Viskositätszahlen (J-Werte) bei etwa 30 bis 100 $cm^3/g$; bevorzugt bei 60 bis 80 $cm^3/g$.

Die Herstellung der aromatischen Polyamide ist grundsätzlich bekannt. Sie wird u. a. in DE-OS 36 09 011 beschrieben. Danach erfolgt die Polykondensation der Komponenten A. und B in Gegenwart einer vom Phosphor abgeleiteten Säure der allgemeinen Formel $H_3PO_n$ mit $n = 2$ bis 4 oder Triphenylphosphit.

Geeignete vom Phosphor abgeleitete Säuren sind hypophosphorige Säure, phosphorige Säure, Phosphorsäure.

Der Katalysator wird in Mengen von 0,05 bis 4 Mol-%, vorzugsweise 0,02 bis 2 Mol-% - bezogen auf die Summe der Komponenten A. und B. -eingesetzt.

Bevorzugt werden der Katalysator und die erfindungsgemäße Verbindung der allgemeinen Formel (I) in äquivalenten Mengen zu einander eingesetzt.

Die Reaktion wird in der Schmelze bei Temperaturen im Bereich von 200 bis 400 °C, vorzugsweise von 230 bis 360 °C durchgeführt.

Üblicherweise wird unter Inertgas bei Normaldruck gearbeitet. Es kann jedoch auch bei Über- bzw. Unterdruck gearbeitet werden.

Zur Erhöhung des Molekulargewichtes können die aromatischen Polyamide einer Festphasennachkondensation in einer Inertgasatmosphäre unterzogen werden.

Die Polyamide können auf üblichen Maschinen durch Spritzguß oder Extrusion zu Formmassen verarbeitet werden.

Die Formmassen können zusätzlich noch Füllstoffe, wie Talkum, oder Verstärkungsmittel, wie Glas-, ARAMID[R]- oder Kohlefasern, sowie ande re übliche Zusätze, wie z. B. Pigmente oder Stabilisatoren, enthalten.

Die Formmassen werden nach üblichen Verfahren wie Spritzguß, Extrusion o. ä. zu Formteilen, Fasern, Folien usw. verarbeitet. Ebenso ist die Verwendung als Beschichtungsmittel ausgehend vom Pulver (z. B. Wirbelsinterverfahren), einer flüssigen Dispersion oder einer Lösung möglich.

Nach dem erfindungsgemäßen Verfahren hergestellte aromatische Polyamide weisen eine unerwartet hohe Temperaturstabilität auf. Eine Verarbeitung der Produkte kann noch bei Temperaturen > 340 °C erfolgen, ohne daß eine Abnahme des Molekulargewichtes oder eine Braunfärbung eintritt. Ferner zeigen erfindungsgemäß erhaltene Formmassen eine hervorragende Stabilität gegenüber Thermooxidation, so daß sie noch bei deutlich höheren Temperaturen als entsprechende Massen des Standes der Technik eingesetzt werden können.

Die in der Beschreibung und in den Beispielen genannten Parameter wurden mit Hilfe nachstehender

Verfahren bestimmt.

Der Glaspunkt ($T_g$) wurde unter Verwendung eines DSC bei einer Aufheizrate von 10 °C/min. bestimmt.

Die Viskositätszahlen (J) wurden an 0,5 Gew.-%igen Lösungen der Polymeren in einem Phenol/o-Dichlorbenzol-Gemisch (1 : 1 Gewichtsteile) bei 25 °C nach DIN 53 728 bestimmt.-

Mit Buchstaben gekennzeichnete Beispiele sind nicht erfindungsgemäß.

## Beispiele

### Beispiel 1

21,62 g (0,05 Mol) 4.4′-Bis(4-aminophenoxy)diphenylsulfon und 8,31 g (0,05 Mol) Isophthalsäure wurden mit 109 µl (0,001 Mol) 50 Gew.-%iger wässriger $H_3PO_2$ und 118 mg (0,001 Mol) Benzimidazol in einem Polykondensationsreaktor mit Rührer, Stickstoffeinleitung und Destillations brücke bei 250 °C aufgeschmolzen. Die Temperatur wurde nach 20 Minuten auf 300 °C erhöht. Dabei nahm die Viskosität der Schmelze stetig zu, während das im Verlauf der Reaktion freiwerdende Wasser abdestilliert wurde. Nach 1 Stunde bei 300 °C wurde die Reaktion abgebrochen.

Die Viskositätszahl (J) des Polyamids betrug 66 $cm^3$/g.

### Beispiel 2

21,62 g (0,05 Mol) 4.4′-Bis(4-aminophenoxy)diphenylsulfon und 8,31 g (0,05 Mol) Isophthalsäure wurden mit 109 µl (0,001 Mol) 50 Gew.-%iger wässriger $H_3PO_2$ und 194 mg (0,001 Mol) 2-Phenylbenzimidazol analog Beispiel 1 umgesetzt.

Die Viskositätszahl (J) betrug 40 $cm^3$/g.

### Beispiel 3

21,62 g (0,05 Mol) 4.4′-Bis(4-aminophenoxy)diphenylsulfon und 8,31 g (0,05 Mol) Isophthalsäure wurden mit 310 mg (0,001 Mol) Triphenylphospit und 119 mg (0,001 Mol) Benzoxazol analog Beispiel 1 umgesetzt. Nach 40 Minuten bei 300 °C erhielt man ein Polyamid mit der Viskositätszahl (J) von 37 $cm^3$/g.

Die Festphasennachkondensation bei 250 °C und 0,5 mbar ergab nach 24 h J = 99 $cm^3$/g.

### Beispiel A (DE-OS 36 09 011)

21,62 g (0.05 Mol) 4.4′ Bis(4-aminophenoxydiphenylsulfon und 8,31 g (0,05 Mol) Isophthalsäure wurden mit 109 µl (0,001 Mol) 50 Gew.-%iger Hypophosphoriger Säure analog Beispiel 1 umgesetzt.

Die Viskositätszahl (J) des Polyamids betrug 31 ccm/g. Durch Festphasennachkondensation bei 250 °C und 0,5 mbar wurde nach 24 h ein Polyamid mit J = 60 $cm^3$/g erhalten.

### Beispiel B (DE-OS 36 09 011)

21,62 g (0,05 Mol) 4.4′ Bis(4-aminophenoxy)diphenylsulfon und 8,31 g (0,05 Mol) Isophthalsäure wurden mit 109 µl (0,001 Mol) 50 Gew.-%iger wässriger Hypophosphoriger Säure und 122 mg (0,001 Mol) 4-Dimethylaminopyridin analog Beispiel 1 umgesetzt.

Die Viskositätszahl (J) des Polyamides betrug 35 $cm^3$/g. Durch Festphasennachkondensation bei 250 °C und 0,5 mbar wurde nach 24 h ein Polyamid mit J = 67 $cm^3$/g erhalten.-

Die in den Beispielen 1 und 3 sowie in den Vergleichsbeispielen hergestellten Polyamide wurden bei 310 °C und einem Druck von 100 bar zu Platten von 1 mm Dicke verpreßt und in einem Umluftofen mit ca. 10 Vol.-% Frischluftzufuhr 24 h bei 200 °C gelagert. Die nach dem Stand der Technik hergestellten Polyamide waren sehr stark dunkelbraun verfärbt, während die erfindungsgemäß hergestellten Polyamide keine farblichen Veränderungen aufwiesen.

## Ansprüche

1. Verfahren zur Herstellung eines thermoplastisch verarbeitbaren, aromatischen Polyamids durch Polykondensieren nachstehender Ausgangsmonomeren:

A. HOOC - Ar - COOH

B. $H_2N$ - Ar' - $NH_2$

hierbei bedeutet

Ar: 1.3-oder 1.4-Phenylen; 1.4-, 1.5-, 2.6- oder 2.7-Naphthylen,

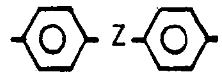

oder

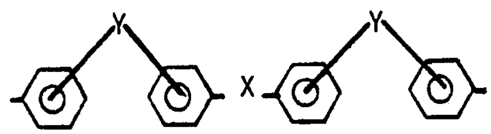 ;

Ar':

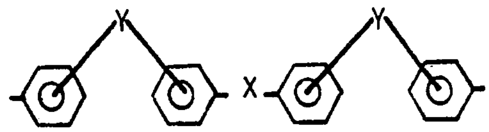 ;

X: $-SO_2-$; -CO-;

Y: -O-; -S-;

Z: -O-; -S-; $-SO_2-$; -CO-; $-CR_2-$;

R: -H; $C_1$ - $C_4$-Alkyl;

in der Schmelze in Gegenwart von 0,05 bis 4 Mol-% - bezogen auf die Summe der Komponenten A. und B. - einer vom Phosphor abgeleiteten Säure der allgemeinen Formel $H_3PO_n$ mit n = 2 bis 4 oder Triphenylphosphit bei Temperaturen im Bereich von 200 bis 400 °C,

dadurch gekennzeichnet,

daß die Polykondensationsreaktion in Gegenwart von 0,05 bis 4 Mol-% bezogen auf die Summe der Komponenten A. und B. einer Verbindung der allgemeinen Formel I

(I) 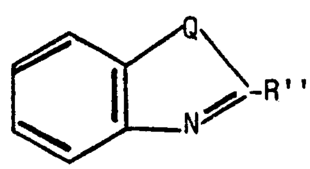 ,

in der

Q: -O-; -S-; N-R''';

R'', R''': -H; $C_1$ - $C_6$-Alkyl, Phenyl;

bedeuten und wobei R'' und R''' gleich oder verschieden sein können, ausgeführt wird.

2. Verfahren nach Anspruch 1,

dadurch gekennzeichnet, daß die Verbindung der allgemeinen Formel (I) in einer Menge von 0,2 bis 2 Mol-% - bezogen auf die Summe der Komponenten A. und B. - in der Reaktionsmischung enthalten ist.

3. Verfahren nach Anspruch 1,

dadurch gekennzeichnet, daß die Verbindung der allgemeinen Formel (I) in äquimolaren Mengen bezogen auf die Phosphorverbindung in der Reaktionsmischung enthalten ist.

4. Formmassen auf der Basis der thermoplastisch verarbeitbaren, aromatischen Polyamide gemäß Anspruch 1.

Europäisches Patentamt

# EUROPÄISCHER RECHERCHENBERICHT

Nummer der Anmeldung

EP 89 12 3890

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-A- 9 011 (HÜLS)<br>* Ansprüche 1-3,5 *<br>--- | 1-4 | C 08 G 69/32<br>C 08 G 69/42<br>C 08 K 5/353<br>C 08 K 5/3447<br>C 08 K 5/46 |
| Y | US-A-4 182 703 (IRICK et al.)<br>* Anspruch 1; Seite 5, Absatz 64 - Seite 6, Absatz 3 *<br>--- | 1-4 | |
| A | BE-A- 936 120 (SOCIETE DE PRODUITS CHIMIQUES ET DE SYNTHESE)<br>* Anspruch 1; Beispiel 8 *<br>--- | 1-4 | |
| A | DE-A-3 718 212 (CENTRAL GLASS CO., LTD)<br>* Ansprüche *<br>----- | 1-4 | |

RECHERCHIERTE SACHGEBIETE (Int. Cl.5)

C 08 G
C 08 K

Der vorliegende Recherchenbericht wurde für alle Patentansprüche erstellt

| Recherchenort | Abschlußdatum der Recherche | Prüfer |
|---|---|---|
| DEN HAAG | 07-06-1990 | GLANDDIER A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)